# EUROPEAN PATENT SPECIFICATION

(11) **EP 3 918 765 B1**
(45) Date of publication and mention of the grant of the patent: **13.11.2024**
(21) Application number: 19912996.6
(22) Date of filing: 31.01.2019
(51) Int. Cl.: H04W 28/02, H04W 28/10, H04W 4/50, H04W 28/08, H04L 67/56, H04L 67/5682

(54) **PACKET SWITCH (PS) DATA OFF FEATURE INITIATED IN A NETWORK**
IN EINEM NETZWERK INITIIERTE FUNKTION ZUR AUSSCHALTUNG VON PACKET-SWITCH (PS)-DATEN
FONCTION DE DÉSACTIVATION DE DONNÉES DE COMMUTATEUR DE PAQUETS (PS) DÉCLENCHÉE DANS UN RÉSEAU

(43) Date of publication of application: 08.12.2021
(73) Proprietor: Nokia Solutions and Networks Oy, 02610 Espoo (FI)
(72) Inventor: CAI, Yigang, Naperville, Illinois 60564 (US); LI, Xiangyang, Beijing 100102 (CN)
(74) Representative: Novagraaf Technologies
(86) International application number: PCT/CN2019/074258
(87) International publication number: WO 2020/155048

(56) References cited:
- WO-A1-2014/081637
- WO-A1-2018/007214
- WO-A1-2018/037126
- CN-A- 107 635 222
- CN-A- 109 076 089
- ANONYMOUS: "Study on 3GPP PS Data Off (Release 14)", 3GPP TR 23.702 V14.0.0, 1 December 2016 (2016-12-01), XP055513355
- INTEL: "new key issues for PS Data Off", 3GPP DRAFT; S2-163300, 15 July 2016 (2016-07-15), Vienna, Austria, pages 1 - 3, XP051120986

## Description

### Technical Field

This disclosure relates to the field of communication systems and, in particular, to mobile communication networks that provide services.

### Background

Mobile devices or User Equipment (UE), such as a smart phone with data communication capabilities, can automatically establish a data session with telecommunication networks. A UE may have an "always-on" connection with the network, which means that one or more data sessions are activated. For a data session, an individual UE may initiate a large number of data services depending on the number of software applications executing thereon. A UE may attempt to establish data services when the network policy and charging control policy doesn't allow for establishment of the data services, which may lead to rejection of the data services. For example, a UE may request a data service when the billing account associated with the UE does not have a sufficient balance to support the requested service. Frequent requests or repeated attempts to initiate data services and rejections thereof may impose a significant burden on the resources of the network, as well as those of the UEs. For example, smart phones may initiate thousands (e.g. 5000-7000) of service requests per day that result in denial of the data service. It is therefore desirable to control whether data services are available to a UE.

WO 2014/081637 A1 discloses a process implemented by a proxy-based system for triggering an upper layer congestion control mechanism at a mobile device based on one or more access barring messages received from a host server. 3GPP standardization is provided in "Study on 3GPP PS Data Off (Release 14)", 3GPP TR 23.702 V14.0.0.

### Summary

The invention is defined by the appended claims.

Embodiments described herein set forth a network-initiated Packet Switch (PS) Data off feature where the network activates a PS Data off feature for one or multiple UEs. A network element may monitor network traffic load, subscriber account status, location of the UE, and/or other network service conditions to determine when to activate a PS Data off feature for a UE. The network element then generates a PS Data off request that is sent to other devices, such as other network elements and the UE, to invoke the PS Data off feature for the UE. By initiating the PS Data off feature in the network, the network may save network resources and avoid unnecessary control signaling caused by repeated attempts to access data services that are not authorized for the UE.

One embodiment comprises a network element implemented in a network that provides one or more data services to a UE. The network element includes a processor (or multiple processors) and a memory that cause the network element to store a data off policy that triggers activation or deactivation of a PS Data off feature for the UE, to determine whether to activate the PS Data off feature for the UE based on the data off policy and one or more network service conditions, to generate a first PS Data off request to activate the PS Data off feature for the UE responsive to a determination to activate the PS Data off feature, and to initiate transmission of the first PS Data off request for receipt by a gateway of the network that acts as an entry point for downlink traffic for the UE.

In another embodiment, the processor and memory cause the network element to initiate transmission of the first PS Data off request for receipt by the UE.

In another embodiment, the processor and the memory cause the network element to determine whether to deactivate the PS Data off feature for the UE based on the data off policy and the network service conditions, to generate a second PS Data off request to deactivate the PS Data off feature for the UE responsive to a determination to deactivate the PS Data off feature, and to initiate transmission of the second PS Data off request for receipt by the gateway.

In another embodiment, the processor and the memory cause the network element to initiate transmission of the second PS Data off request for receipt by the UE.

In another embodiment, the processor and the memory cause the network element to generate (as part of the first PS Data off request) a NE-Initiated PS Data Off Status indicating whether the PS Data off feature is activated or deactivated, a NE-Initiated PS Data Off Exempt Service List indicating at least one data service that is exempt from the PS Data off feature, and a NE-Initiated PS Data Off Reason indicating a basis for activating or deactivating the PS Data off feature by the network element.

In another embodiment, the processor and the memory cause the network element to generate the NE-Initiated PS Data Off Exempt Service List based on the data off policy.

In another embodiment, the network element comprises an online charging system for the network.

In another embodiment, the network element comprises a policy control element for the network.

Another embodiment comprises a method of controlling a PS Data off feature at a network element of a network that provides one or more data services to a UE. The method comprises storing a data off policy that triggers activation or deactivation of the PS Data off feature for the UE, determining whether to activate the PS Data off feature for the UE based on the data off policy and one or more network service conditions, generating a first PS Data off request to activate the PS Data off feature for the UE responsive to a determination to activate the PS Data off feature, and initiating transmission of the first PS Data off request for receipt by a gateway of the network that acts as an entry point for downlink traffic for the UE.

In another embodiment, the method further comprises initiating transmission of the first PS Data off request for receipt by the UE.

In another embodiment, the method further comprises determining whether to deactivate the PS Data off feature for the UE based on the data off policy and the network service conditions, generating a second PS Data off request to deactivate the PS Data off feature for the UE responsive to a determination to deactivate the PS Data off feature, and initiating transmission of the second PS Data off request for receipt by the gateway.

In another embodiment, the method further comprises initiating transmission of the second PS Data off request for receipt by the UE.

In another embodiment, generating the first PS Data off request comprises generating a NE-Initiated PS Data Off Status indicating whether the PS Data off feature is activated or deactivated, generating a NE-Initiated PS Data Off Exempt Service List indicating at least one data service that is exempt from the PS Data off feature, and generating a NE-Initiated PS Data Off Reason indicating a basis for activating or deactivating the PS Data off feature by the network element.

In another embodiment, generating the NE-Initiated PS Data Off Exempt Service List comprises generating the NE-Initiated PS Data Off Exempt Service List based on the data off policy.

Another embodiment comprises a network element of a network that provides one or more data services to a UE. The network element comprises a means for storing a data off policy that triggers activation or deactivation of a PS Data off feature for the UE, a means for determining whether to activate the PS Data off feature for the UE based on the data off policy and one or more network service conditions, a means for generating a first PS Data off request to activate the PS Data off feature for the UE responsive to a determination to activate the PS Data off feature, and a means for initiating transmission of the first PS Data off request for receipt by a gateway of the network that acts as an entry point for downlink traffic for the UE.

In another embodiment, the network element includes a means for initiating transmission of the first PS Data off request for receipt by the UE.

In another embodiment, the network element includes a means for determining whether to deactivate the PS Data off feature for the UE based on the data off policy and the network service conditions, a means for generating a second PS Data off request to deactivate the PS Data off feature for the UE responsive to a determination to deactivate the PS Data off feature, and a means for initiating transmission of the second PS Data off request for receipt by the gateway.

In another embodiment, the network element includes a means for initiating transmission of the second PS Data off request for receipt by the UE.

Other embodiments may include computer readable media, other systems, or other methods as described below.

The above summary provides a basic understanding of some aspects of the specification. This summary is not an extensive overview of the specification. It is intended to neither identify key or critical elements of the specification nor delineate any scope of the particular embodiments of the specification, or any scope of the claims. Its sole purpose is to present some concepts of the specification in a simplified form as a prelude to the more detailed description that is presented later.

### Description of the Drawings

Some embodiments of the invention are now described, by way of example only, and with reference to the accompanying drawings. The same reference number represents the same element or the same type of element on all drawings.
FIG. 1 illustrates a communication network.
FIG. 2 illustrates an Evolved Packet Core (EPC) network.
FIG. 3 illustrates a non-roaming architecture of a next generation network.
FIG. 4 is a block diagram of a network element in an illustrative embodiment.
FIG. 5 is a block diagram of User Equipment (UE) in an illustrative embodiment.
FIG. 6 is a flow chart illustrating a method of activating a NE-initiated PS Data off feature at a network element in an illustrative embodiment.
FIG. 7 is a flow chart illustrating a method of activating a NE-initiated PS Data off feature in a UE in an illustrative embodiment.
FIG. 8 is a flow chart illustrating a method of deactivating a NE-initiated PS Data off feature at a network element in an illustrative embodiment.
FIG. 9 is a flow chart illustrating a method of deactivating a NE-initiated PS Data off feature in a UE in an illustrative embodiment.

### Description of Embodiments

The figures and the following description illustrate specific exemplary embodiments. It will thus be appreciated that those skilled in the art will be able to devise various arrangements that, although not explicitly described or shown herein, embody the principles of the embodiments and are included within the scope of the embodiments. Furthermore, any examples described herein are intended to aid in understanding the principles of the embodiments, and are to be construed as being without limitation to such specifically recited examples and conditions. As a result, the inventive concept(s) is not limited to the specific embodiments or examples described below, but by the claims and their equivalents.

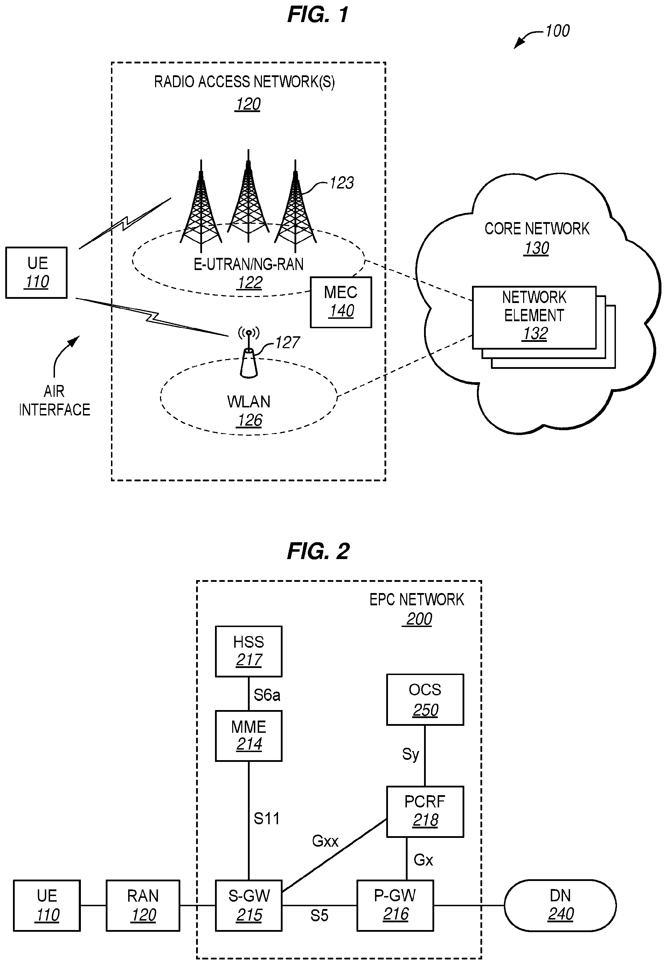

FIG. 1 illustrates a communication network 100. Communication network 100 is a cellular network or mobile network where the last link is wireless, and provides voice and/or data services to a plurality of devices. Communication network 100 may be a Third Generation (3G) network, a Fourth Generation (4G) network (e.g., Long-Term Evolution (LTE)), or a next generation network (e.g., 5G).

Communication network 100 is illustrated as providing communication services (i.e., voice and/or data services) to UE 110 and other UEs not shown. UE 110 is enabled for voice and/or data services. For example, UE 110 may be an end user device such as a mobile phone (e.g., smartphone), a tablet or PDA, a computer with a mobile broadband adapter, etc.

Communication network 100 includes one or more Radio Access Networks (RAN) 120 that communicate with UE 110 over radio signals. RAN 120 may support Evolved-UMTS Terrestrial Radio Access Network (E-UTRAN) access, Wireless Local Area Network (WLAN) access, fixed access, satellite radio access, new Radio Access Technologies (RAT), etc. As an example, RAN 120 may comprise an E-UTRAN or Next Generation RAN (NG-RAN) 122 that includes one or more base stations 123. Base station 123 comprises an entity that uses radio communication technology to communicate with a UE on the licensed spectrum, and interface the UE with a core network. Base stations 123 in an E-UTRAN are referred to as Evolved-NodeBs (eNodeB). Base stations 123 in an NG-RAN are referred to as gNodeBs (NR base stations) and/or ng-eNodeBs (LTE base stations supporting a 5G Core Network). As another example, RAN 120 may comprise a WLAN 126 that includes one or more Wireless Access Points (WAP) 127. WLAN 126 is a network in which a UE is able to connect to a Local Area Network (LAN) through a wireless (radio) connection. WAP 127 is a node that uses radio communication technology to communicate with a UE over the unlicensed spectrum, and provides the UE access to a core network. One example of WAP 127 is a WiFi access point that operates on the 2.4 GHz or 5 GHz radio bands.

UE 110 is able to attach to RAN 120 to access a core network 130. In other words, RAN 120 represents the air interface between UE 110 and core network 130. Core network 130 is the central part of communication network 100 that provides various services to customers who are connected by RAN 120. One example of core network 130 is the Evolved Packet Core (EPC) network as suggested by the 3GPP for LTE. Another example of core network 130 is a 5G core network as suggested by the 3GPP. Core network 130 includes one or more network elements 132, which comprise a server, device, apparatus, or equipment (including hardware) that provides or supports services accessible to UE 110. Network elements 132, in an EPC network, may comprise a Mobility Management Entity (MME), a Serving Gateway (S-GW), a Packet Data Network Gateway (P-GW), an Online Charging System (OCS), etc. Network elements 132, in a 5G network, may comprise an Access and Mobility Management Function (AMF), a Session Management Function (SMF), a Policy Control Function (PCF), an Application Function (AF), an OCS, etc.

A network element 132 may also be implemented in RAN 120, such as in the case of Mobile Edge Computing (MEC). MEC is an edge computing technology that enables the deployment of services (e.g., IT services and cloud services) within the (R)AN to more effectively provide latency-sensitive services and improve user experience. MEC may also be referred to as Mini Cloud, Cloudlet, Mobile Edge Cloud, Multi-access Edge Computing, or Fog Computing. To implement MEC, compute capabilities are implemented at one or more base stations or other functionalities of the RAN so that services are deployed closer to the UEs. For example, a MEC server 140 may be implemented at a base station of a (R)AN to provide MEC services to UEs in range of the base station. When referred to as being implemented "at" the base station, a MEC server may be part of the base station (i.e., part of the controller of the base station) or may be an external server deployed between the base station and the core network. A MEC server may alternatively be implemented at a WiFi server of the (R)AN or another wireless server.

A network element 132 as described herein may be implemented in 4G and/or 5G networks. FIGS. 2-3 illustrate 4G and 5G networks, respectively, to show environments where a network element 132 may be implemented.

FIG. 2 illustrates an Evolved Packet Core (EPC) network 200, which is the core network for LTE. EPC network 200 includes a Mobility Management Entity (MME) 214, a Serving Gateway (S-GW) 215, a Packet Data Network Gateway (P-GW) 216, a Home Subscriber Server (HSS) 217, a Policy and Charging Rules Function (PCRF) 218, and an Online Charging System (OCS) 250, but may include other elements not shown, such as IP Multimedia Subsystem (IMS) Application Servers. Within the EPC network 200, the user data (also referred to as the "user plane") and the signaling (also referred to as the "control plane") are separated. MME 214 handles the control plane within EPC network 200. For instance, MME 214 handles the signaling related to mobility and security for E-UTRAN access. MME 214 is responsible for tracking and paging UE 110 in idle-mode. S-GW 215 and P-GW 216 handle the user plane. S-GW 215 and P-GW 216 transport data traffic between UE 110 and external data networks 240 (DN or Packet Data Network (PDN)). S-GW 215 is the point of interconnect between the radio-side and EPC network 200, and serves UE 110 by routing incoming and outgoing IP packets. S-GW 215 is also the anchor point for the intra-LTE mobility (i.e., in case of handover between eNodeBs), and between LTE and other 3GPP accesses. P-GW 216 is the point of interconnect between EPC network 200 and external data networks 240 (i.e., point of ingress or egress for data network 240), and routes packets to and from data network 240. HSS 217 is a database that stores user-related and subscriber-related information. PCRF 218 provides a Policy and Charging Control (PCC) solution in EPC network 200. PCRF 218 is a node or entity of EPC network 200 that formulates PCC rules for services requested by an end user.

OCS 250 comprises a server, device, apparatus, or equipment (including hardware) that provides online charging for services provided in EPC network 200. Online charging is a charging mechanism where charging information can affect, in real-time, the service rendered and therefore a direct interaction of the charging mechanism with session/service control is required. Online charging can be of two types: session-based or event-based. In event-based charging, a charging event is reported for a single operation. In session-based charging, multiple charging events are reported for a session. A further discussion of charging principles is described in 3GPP TS 32.240 (v15.0.0), which is incorporated by reference as if fully included herein. Although the charging domain is referred to herein as an OCS, it may be a combined online and offline charging system.

MME 214 connects to S-GW 215 through the S11 interface, and connects to HSS 217 through the S6a interface. The S6a interface enables transfer of subscription and authentication data for authenticating or authorizing user access between MME 214 and HSS 217. PCRF 218 connects to P-GW 216 through the Gx interface. The Gx interface provides transfer of policy and charging rules from PCRF 218 to a Policy and Charging Enforcement Function (PCEF) in P-GW 216. PCRF 218 connects to S-GW 215 through the Gxx interface. The Gxx interface resides between PCRF 218 and a Bearer Binding and Event Reporting Function (BBERF) integrated within S-GW 215. S-GW 215 connects to P-GW 216 through the S5 interface. OCS 250 connects with PCRF 218 through an Sy interface.

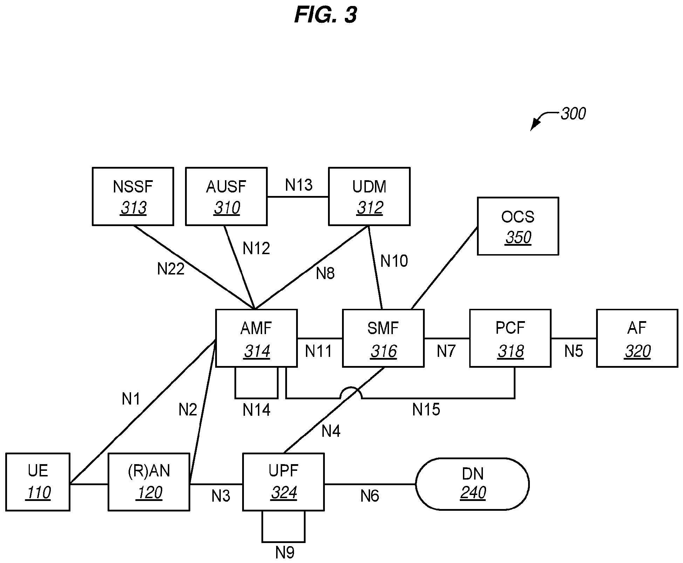

FIG. 3 illustrates a non-roaming architecture 300 of a next generation network. The architecture in FIG. 3 is a reference point representation, as is further described in 3GPP TS 23.501 (v1.5.0), which is incorporated by reference as if fully included herein. Architecture 300 is comprised of Network Functions (NF) for a core network, which may be implemented either as a network element on dedicated hardware, as a software instance running on dedicated hardware, or as a virtualized function instantiated on an appropriate platform (e.g., a cloud infrastructure). The network functions for the control plane are separated from the user plane. The control plane of the core network includes an Authentication Server Function (AUSF) 310, a Unified Data Management (UDM) 312, a Network Slice Selection Function (NSSF) 313, an Access and Mobility Management Function (AMF) 314, a Session Management Function (SMF) 316, a Policy Control Function (PCF) 318, an Application Function (AF) 320, and an OCS 350. The user plane of the core network includes one or more User Plane Functions (UPF) 324 that communicate with data network 240. UE 110 is able to access the control plane and the user plane of the core network through (R)AN 120.

AUSF 310 is configured to support authentication of UE 110. UDM 312 is configured to store subscription data/information for UE 110. UDM 312 may store three types of user data: subscription, policy, and session-related context (e.g., UE location). AMF 314 is configured to provide UE-based authentication, authorization, mobility management, etc. SMF 316 is configured to provide the following functionality: session management (SM), UE Internet Protocol (IP) address allocation and management, selection and control of UPF(s), termination of interfaces towards PCF 318, control part of policy enforcement and Quality of Service (QoS), lawful intercept, termination of SM parts of NAS messages, Downlink Data Notification (DNN), roaming functionality, handle local enforcement to apply QoS for Service Level Agreements (SLAs), charging data collection and charging interface, etc. If UE 110 has multiple sessions, different SMFs may be allocated to each session to manage them individually and possibly provide different functionalities per session. PCF 318 is configured to support a unified policy framework to govern network behavior, and to provide policy rules to control plane functions for QoS enforcement, charging, access control, traffic routing, etc. AF 320 provides information on a packet flow to PCF 318. Based on the information, PCF 318 is configured to determine policy rules about mobility and session management to make AMF 314 and SMF 316 operate properly.

UPF 324 supports various user plane operations and functionalities, such as packet routing and forwarding, traffic handling (e.g., QoS enforcement), an anchor point for Intra-RAT/Inter-RAT mobility (when applicable), packet inspection and policy rule enforcement, lawful intercept (UP collection), traffic accounting and reporting, etc. Data network 240 is not part of the core network, and provides Internet access, operator services, 3rd party services, etc. For instance, the International Telecommunication Union (ITU) has classified 5G mobile network services into three categories: Enhanced Mobile Broadband (eMBB), Ultra-reliable and Low-Latency Communications (uRLLC), and Massive Machine Type Communications (mMTC) or Massive Internet of Things (MIoT). eMBB focuses on services that have high bandwidth requirements, such as HD videos, Virtual Reality (VR), and Augmented Reality (AR). uRLLC focuses on latency-sensitive services, such as automated driving and remote management. mMTC and MloT focuses on services that include high requirements for connection density, such as smart city and smart agriculture. Data network 240 may be configured to provide these and other services.

Architecture 300 includes the following reference points. The N1 reference point is implemented between UE 110 and AMF 314. The N2 reference point is implemented between (R)AN 120 and AMF 314. The N3 reference point is implemented between (R)AN 120 and UPF 324. The N4 reference point is implemented between the SMF 316 and UPF 324. The N5 reference point is implemented between PCF 318 and AF 320. The N6 reference point is implemented between UPF 324 and data network 240. The N7 reference point is implemented between the SMF 316 and PCF 318. The N8 reference point is implemented between UDM 312 and AMF 314. The N9 reference point is implemented between two UPFs 324. The N10 reference point is implemented between UDM 312 and SMF 316. The N11 reference point is implemented between AMF 314 and SMF 316. The N12 reference point is implemented between AMF 314 and AUSF 310. The N13 reference point is implemented between UDM 312 and AUSF 310. The N14 reference point is implemented between two AMFs. The N15 reference point is implemented between PCF 318 and AMF 314 in the case of a non-roaming scenario. The N22 reference point is implemented between NSSF 313 and AMF 314.

In the embodiments described herein, a network element is configured to initiate a PS Data off feature for a UE. The 3GPP has set forth the concept of a PS Data off feature in 3GPP TS 22.011 (v16.4.0), which is incorporated by reference as if fully included herein. According to the 3GPP, PS Data Off is a feature which, when configured by the Home Public Land Mobile Network (HPLMN) and activated by the user, prevents transport via PDN connections in 3GPP access networks of all data packets except IP packets required by 3GPP PS Data Off Exempt Services. The 3GPP system provides a mechanism by which an operator can configure which operator services are defined as the 3GPP PS Data Off Exempt Services for their subscribers.

When 3GPP PS Data Off is activated in the UE, in order to preserve charging consistency, the UE informs the network that 3GPP PS Data Off is activated, the UE ceases the sending of uplink IP Packets of all services that are not 3GPP PS Data Off Exempt Services, the network ceases the sending of downlink IP Packets to the UE for all services that are not 3GPP PS Data Off Exempt Services, the UE ceases the sending of uplink traffic over non-IP PDN types, and the network ceases the sending of downlink traffic over non-IP PDN types. Disabling of traffic on both the uplink and downlink is needed in order to provide consistency of charging between the HPLMN and a Visited PLMN (VPLMN), as well as consistency between what the user expects and what the user may be billed for.

Each of the following operator services are configurable by the HPLMN operator to be part of the 3GPP PS Data Off Exempt Services: MMTel Voice, SMS over IMS, USSD over IMS (USSI), MMTel Video, Particular IMS services not defined by 3GPP, where each such IMS service is identified by an IMS communication service identifier, Device Management over PS, Management of USIM files over PS (e.g. via Bearer Independent Protocol), and IMS Supplementary Service configuration via the Ut interface using XCAP.

According to the 3GPP, a PS Data Off feature is activated in the UE by a user. However, a PS Data Off feature initiated by end user through the UE may be insufficient. Core networks, sub-networks (like edge computing), local cloud, network elements (NEs), and applications in the network should have a capability to initiate a PS Data Off feature to save network resources and data service speed. For example, unnecessary data flows in MEC will impact throughput, latency, and reliability such as for 5G use cases. To address these and other problems, the embodiments herein set forth a mechanism in one or more network elements to activate a PS Data Off feature for a UE.

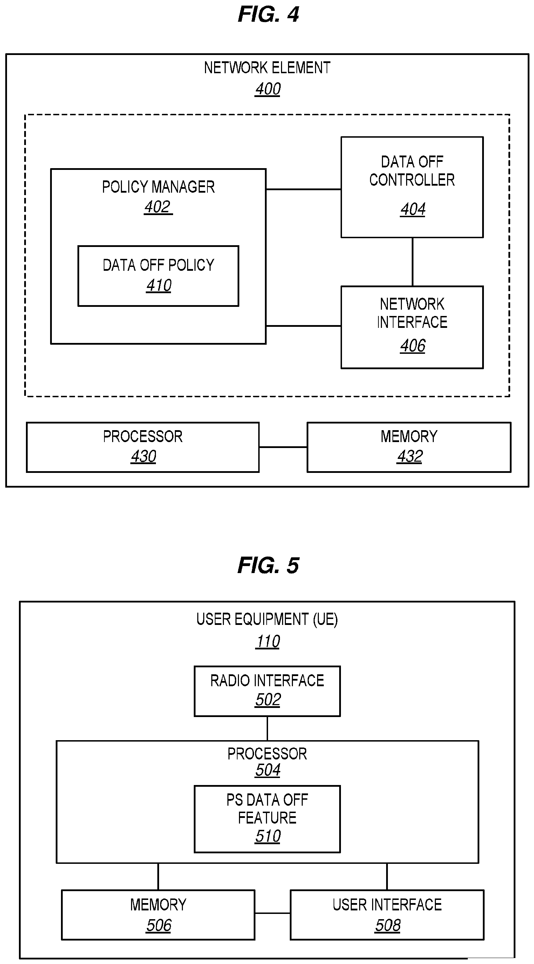

FIG. 4 is a block diagram of a network element 400 in an illustrative embodiment. Network element 400 may represent a network element 132, such as shown in FIG. 1. However, it should be noted that network element 400 is intended as an example of one possible implementation of a network element. As described above, network element 400 is a server, device, apparatus, equipment (including hardware), system, means, etc., that provides or supports services accessible to UEs. Some examples of network element 400 are S-GW 215, OCS 250, a policy control element (e.g., a PCRF 218), or another network element of an EPC network 200, an SMF 316, AF 320, OCS 350, a policy control element (e.g., PCF 318), or another network element of a next generation network, a MEC server 140, a Mobile Device Management (MDM) server, or another network element within the network and distinct from a UE. A policy control element is defined as a network element configured to determine policy rules to support a unified policy framework to govern network behavior, and to provide the policy rules to control plane elements/functions for QoS enforcement, charging, access control, traffic routing, etc.

In this embodiment, network element 400 includes the following subsystems: policy manager 402, a data off controller 404, and a network interface component 406 that operate on one or more platforms. Policy manager 402 may comprise circuitry, logic, hardware, means, etc., configured to store and/or maintain a data off policy 410 or multiple data off policies. Data off policy 410 is criteria defined for triggering activation/deactivation of PS Data off features for a UE or multiple UEs, generating a NE-Initiated PS Data Off Exempt Service List for an activated PS Data off feature, etc. Data off policy 410 may be specific to UE 110 (and/or its associated user), may be specific to network element 400, may apply to multiple UEs, may apply to a geographic area, etc. Policy manager 402 may provide an interface, portal, or other mechanism that allows a network operator (i.e., an entity that manages the network) to define, modify, or update data off policy 410. Policy manager 402 may also provide an interface, portal, or other mechanism that allows a user of a UE to define, modify, or update data off policy 410.

Data off controller 404 may comprise circuitry, logic, hardware, means, etc., configured to determine whether to activate/deactivate a PS Data off feature for a UE. Determinations by data off controller 404 may be based on data off policy 410 and one or more network service conditions. A network service condition comprises a state of the network or a UE for a data service. For example, network service conditions may include time-of-day (ToD), day-of-week (DoW), location of a UE, user spending limit associated with a UE, home/roaming, remaining balance or data allowance, parental control options, operator/government regulations, network traffic load, Quality of Service (QoS) requirements, UE density, access technology, etc. Data off controller 404 may further comprise circuitry, logic, hardware, means, etc., configured to generate a PS Data off request that is used to activate/deactivate a PS Data off feature for a UE. Data off controller 404 may further comprise circuitry, logic, hardware, means, etc., configured to initiate transmission of the PS Data off request for receipt by a gateway of the network, the UE, or another entity. Data off controller 404 may transmit the PS Data off request through network interface component 406. Network interface component 406 may comprise circuitry, logic, hardware, means, etc., configured to exchange control plane messages, signaling, or packets with other elements. Network interface component 406 may operate using a variety of protocols or reference points.

One or more of the subsystems of network element 400 may be implemented on a hardware platform comprised of analog and/or digital circuitry. One or more of the subsystems of network element 400 may be implemented on a processor 430 that executes instructions stored in memory 432. Processor 430 comprises an integrated hardware circuit configured to execute instructions, and memory 432 is a non-transitory computer readable storage medium for data, instructions, applications, etc., and is accessible by processor 430.

Network element 400 may include various other components not specifically illustrated in FIG. 4.

FIG. 5 is a block diagram of UE 110 in an illustrative embodiment. UE 110 includes a radio interface component 502, one or more processors 504, a memory 506, and a user interface component 508. Radio interface component 502 is a hardware component that represents the local radio resources of UE 110, such as transceivers and antennas, used for wireless communications with a base station, access point, etc., via radio or "over-the-air" signals. Processor 504 represents the internal circuitry, logic, hardware, software, etc., that provides the functions of UE 110. Memory 506 is a computer readable storage medium for data, instructions, applications, etc., and is accessible by processor 504. User interface component 508 is a hardware component for interacting with an end user. For example, user interface component 508 may include a screen or touch screen (e.g., a Liquid Crystal Display (LCD), a Light Emitting Diode (LED) display, etc.), a keyboard or keypad, a tracking device (e.g., a trackball or trackpad), a speaker, and a microphone. UE 110 may include various other components not specifically illustrated in FIG. 5.

Processor 504 is configured to implement a PS Data off feature 510 in UE 110. PS Data off feature 510 may be activated by the user through UE 110 as described by the 3GPP. In the embodiments described herein, PS Data off feature 510 may also be activated by the network. When PS Data off feature 510 is activated in UE 110, it ceases the sending of uplink traffic for all services that are not exempt services.

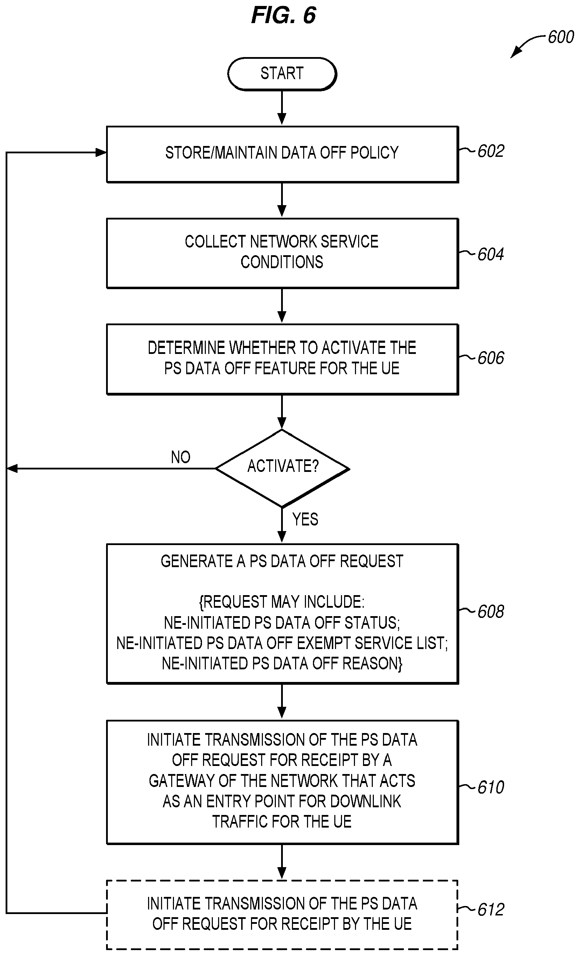

The following description provides further details regarding network-initiated activation of PS Data off features for UEs. FIG. 6 is a flow chart illustrating a method 600 of activating a PS Data off feature at a network element in an illustrative embodiment. The steps of method 600 will be described with reference to network element 400 in FIG. 4, but those skilled in the art will appreciate that method 600 may be performed in other network elements or network functions. Also, the steps of the flow charts described herein are not all inclusive and may include other steps not shown, and the steps may be performed in an alternative order.

In this embodiment, network element 400 is the entity that initiates a PS Data off feature for one or multiple UEs, instead of the UE(s) initiating the PS Data off feature as suggested by the 3GPP. Policy manager 402 of network element 400 stores and/or maintains data off policy 410 (step 602). Data off policy 410 may be pre-provisioned by a network operator, and may be modified or updated based on input from the network operator, the user of UE 110, or another entity.

Data off controller 404 collects or monitors network service conditions (step 604). Data off controller 404 determines whether to activate the PS Data off feature for UE 110 (step 606). In one embodiment, data off controller 404 may determine whether to activate the PS Data off feature based on data off policy 410 and one or more of the network service conditions. In another embodiment, data off controller 404 may determine whether to activate the PS Data off feature based on a request from another network element. For example, an OCS may request activation of the PS Data Off feature based on an account status associated with UE 110, such as in a Diameter Credit Control Request (CCR).

Responsive to a determination to activate the PS Data off feature, data off controller 404 generates a PS Data off request to activate the PS Data off feature for UE 110 (step 608). The PS Data off request comprises a message, signaling, command, etc., used to convey information for a PS Data off feature initiated by a network element (NE). A PS Data off request may include the following parameters or information: a NE-Initiated PS Data Off Status, a NE-Initiated PS Data Off Exempt Service List, and a NE-Initiated PS Data Off Reason. The NE-Initiated PS Data Off Status indicates whether the PS Data off feature is activated or deactivated for a UE. The NE-Initiated PS Data Off Status may also indicate other options, such as a time period for activating/deactivating the PS Data off feature as pre-configured by a network operator, a time period for activating/deactivating the PS Data off feature as dynamically determined by network element 400 based on data off policy 410, a start/stop time for activating/deactivating, etc.

The NE-Initiated PS Data Off Exempt Service List is a set of operator services that are allowed even if the PS Data off feature has been activated for a UE. The NE-Initiated PS Data Off Exempt Service List may be dynamically determined by network element 400 based on data off policy 410. The NE-Initiated PS Data Off Exempt Service List may be mapped to a list of "exempt" data filters (e.g., Traffic Flow Template (TFT)). A data filter (or packet filter) allows a gateway in the core network to classify packets received from an external data network into the correct Packet Data Protocol (PDP) context. When incoming data packets arrive from the external data network, the gateway maps the incoming data packets to a PDP context based on the data filters. Based on the NE-Initiated PS Data Off Exempt Service List, the gateway is able to distinguish incoming data packets for an exempt data service(s) from incoming data packets for a non-exempt data service(s). The NE-Initiated PS Data Off Exempt Service List may include the following information:
- Exempt service operation code: the action to be taken, such as create a list of exempt services, delete a list of exempt services, add a data service to the existing exempt service list, replace a data service in existing service list, etc.;
- Number of exempt data filters;
- Exempt service data filter direction: the direction of the traffic (i.e., uplink only, downlink only, or bidirectional);
- Exempt service data filter identifier: a unique number to identify a data filter;
- Exempt service data filter evaluation precedence: the precedence for the data filter among all the data filters (e.g., in all TFTs associated with a PDP address);
- Exempt data filter contents: variable components with variable size, such as remote/local IPv4/IPv6 address, protocol identifier, remote/local port, etc.

The NE-Initiated PS Data Off Exempt Service List may be provisioned or updated based on input from the end user and/or the network operator. For example, a parent may add and remove exempt data services from the NE-Initiated PS Data Off Exempt Service List based on a child's age.

The NE-Initiated PS Data Off Reason indicates a basis or motive for activating or deactivating a PS-Data Off feature. For example, a NE-Initiated PS Data Off Reason may indicate the motive as QoS control, device density control, balance usage, ToD, DoW, parental control, location, etc.

After generating the PS Data off request, data off controller 404 initiates transmission (through network interface component 406) of the PS Data off request for receipt by a gateway of the network that acts as an entry point for downlink traffic for UE 110 (step 610). For example, a gateway that acts as an entry point for downlink traffic destined for UE 110 may be a P-GW 216 in EPC network 200, or a UPF 324 in a 5G network. The PS Data off request may be its own control message, or may be encapsulated in another control message. The Protocol Configuration Option (PCO) in a GTP parameter may be extended to include the PS Data off request including the NE-Initiated PS Data Off Exempt Service List. The NE-Initiated PS Data Off Exempt Service List may be in GTP-Control Protocol to have the NE-Initiated PS Data Off Exempt Service List applied at the start of a data connection, during the data connection, and at the end of the data connection.

The gateway processes the PS Data off request, and identifies that network element 400 has activated the PS Data off feature for UE 110 based on the NE-Initiated PS Data Off Status. Because the gateway is the entry point for downlink traffic, it is able to filter the downlink traffic destined for UE 110 based on the NE-Initiated PS Data Off Exempt Service List. Thus, the gateway allows packets mapped to an exempt service to pass to UE 110, and blocks packets mapped to a non-exempt service from UE 110.

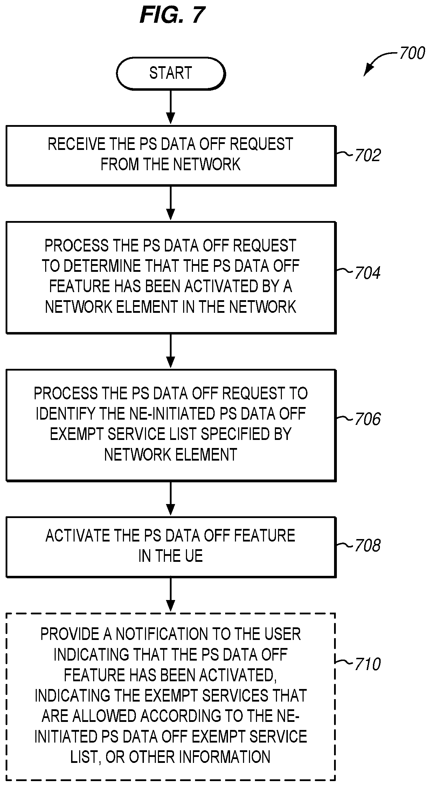

Data off controller 404 may also initiate transmission (through network interface component 406) of the PS Data off request for receipt by UE 110 (optional step 612). For example, network element 400 may format the PS Data off request for transmission over the network, or encode/encapsulate the PS Data off request in another control message. Network element 400 may transmit the PS Data off request to RAN 120 (e.g., to a base station or access point), or to an intermediate element that forwards the PS Data off request to RAN 120. RAN 120 then forwards the PS Data off request to UE 110 via radio signals. UE 110 processes the PS Data off request to activate the PS Data off feature locally within UE 110, which is further described in FIG. 7.

FIG. 7 is a flow chart illustrating a method 700 of activating a NE-initiated PS Data off feature in a UE in an illustrative embodiment. The steps of method 700 will be described with reference to UE 110 in FIG. 5, but those skilled in the art will appreciate that method 700 may be performed in other UEs or mobile devices.

Radio interface component 502 of UE 110 receives the PS Data off request from the network via radio signals (step 702). Again, the PS Data off request may be its own control message, or may be encapsulated in another control message. Processor 504 processes the PS Data off request to determine that the PS Data off feature has been activated by network element 400 (step 704). Processor 504 also processes the PS Data off request to identify the NE-Initiated PS Data Off Exempt Service List specified by network element 400 (step 706). Processor 504 then activates PS Data off feature 510 in UE 110 (step 708) based on the NE-Initiated PS Data Off Exempt Service List. When PS Data off feature 510 is activated in UE 110, processor 504 ceases the sending of uplink traffic of all services that are not specified in the NE-Initiated PS Data Off Exempt Service List. Processor 504 may also provide a notification (optional step 710) to the user via user interface component 508 indicating that the PS Data off feature has been activated, indicating the exempt services that are allowed according to the NE-Initiated PS Data Off Exempt Service List, or other information.

When network element 400 activates the PS Data off feature, the gateway (e.g., P-GW or UPF) will directly bar/reject a downlink traffic request from an application server, an application function, etc. Also, UE 110 will directly bar/reject an uplink traffic request triggered by an application(s) running on UE 110. This advantageously avoids "ping" traffic that can cause congestion and waste network resources in the network.

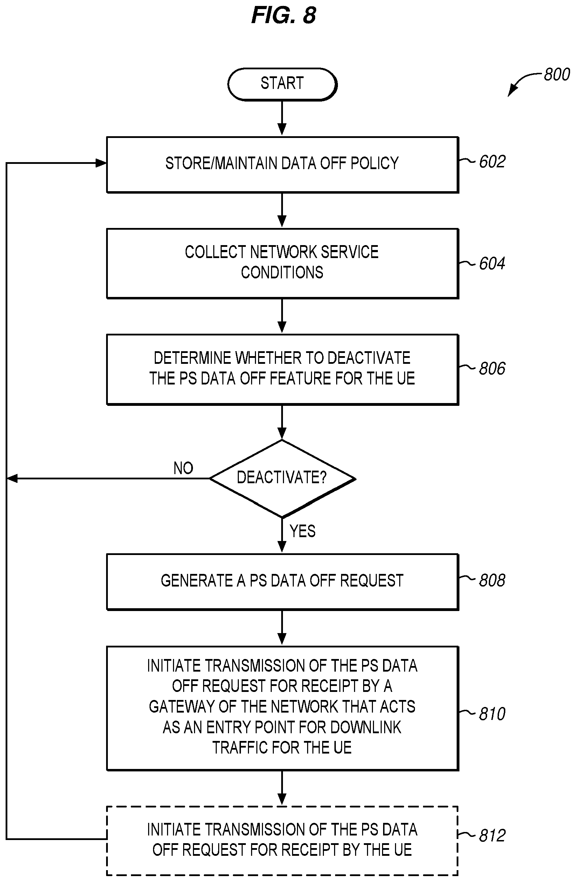

The PS Data off feature as initiated by network element 400 may deactivate automatically based on information provided in the PS Data off request (e.g., after a time period). Alternatively, network element 400 may dynamically deactivate the PS Data off feature. FIG. 8 is a flow chart illustrating a method 800 of deactivating a PS Data off feature at a network element in an illustrative embodiment. The steps of method 800 will be described with reference to network element 400 in FIG. 4, but those skilled in the art will appreciate that method 800 may be performed in other network elements or network functions.

As described above, policy manager 402 stores and/or maintains data off policy 410 (step 602), and data off controller 404 collects or monitors network service conditions (step 604). It is assumed that the PS Data off feature has previously been activated for UE 110, such as according to method 600 above. Data off controller 404 determines whether to deactivate the PS Data off feature for UE 110 (step 806). In one embodiment, data off controller 404 may determine whether to deactivate the PS Data off feature based on data off policy 410 and one or more of the network service conditions. In another embodiment, data off controller 404 may determine whether to deactivate the PS Data off feature based on a request from another network element. For example, an OCS may request deactivation of the PS Data Off feature responsive to replenishment of an account associated with UE 110.

Responsive to a determination to deactivate the PS Data off feature, data off controller 404 generates a PS Data off request to deactivate the PS Data off feature for UE 110 (step 808). Data off controller 404 initiates transmission (through network interface component 406) of the PS Data off request for receipt by a gateway of the network that acts as an entry point for downlink traffic for UE 110 (step 810). The gateway processes the PS Data off request, and identifies that network element 400 has deactivated the PS Data off feature for UE 110 based on the NE-Initiated PS Data Off Status. The gateway then ceases to filter packets according to the NE-Initiated PS Data Off Exempt Service List.

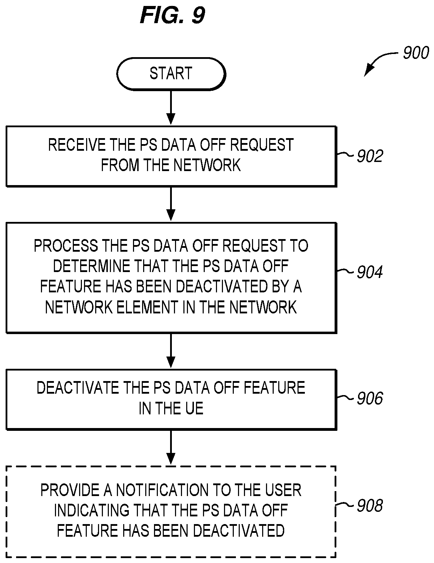

Data off controller 404 may also initiate transmission (through network interface component 406) of the PS Data off request for receipt by UE 110 (optional step 812). UE 110 then processes the PS Data off request to deactivate the PS Data off feature locally in UE 110, which is further described in FIG. 9.

FIG. 9 is a flow chart illustrating a method 900 of deactivating a NE-initiated PS Data off feature in a UE in an illustrative embodiment. The steps of method 900 will be described with reference to UE 110 in FIG. 5, but those skilled in the art will appreciate that method 900 may be performed in other UEs or mobile devices.

Radio interface component 502 of UE 110 receives the PS Data off request from the network via radio signals (step 902). Processor 504 processes the PS Data off request to determine that the PS Data off feature has been deactivated by network element 400 (step 904). Processor 504 then deactivates PS Data off feature 510 in UE 110 (step 906). When PS Data off feature 510 is deactivated in UE 110, processor 504 may send uplink traffic for all services subscribed to by the user. Processor 504 may also provide a notification (optional step 908) to the user via user interface component 508 indicating that the PS Data off feature has been deactivated.

According to the above embodiments, different network elements are able to initiate PS Data Off requests with different NE-Initiated Data Off Exempt Service Lists for UEs. For example, OCS 350 (see FIG. 3) may initiate a PS Data off request for a UE. If a user associated with a UE has no balance in their account, the OCS may send a request to an MDM server to activate a PS Data off feature for the UE with one NE-Initiated Data Off Exempt Service List. After the user has recharged the balance, the OCS may send a request to the MDM server to deactivate PS Data off feature. In another example, PCRF 218 (see FIG. 2) may generate a PS Data off request for a UE based on a data off policy and network service conditions (e.g., ToD, DoW, location, etc.), to activate a PS Data off feature with another NE-Initiated Data Off Exempt Service List. An Application Server may enable a user to define when to activate and deactivate a PS Data off feature with another NE-Initiated Data Off Exempt Service List, such as activating the Data off feature during sleeping hours, and deactivating the PS Data off feature during non-sleeping hours. Thus, there is flexibility in how/when a PS Data off feature is activated in a network.

Any of the various elements or modules shown in the figures or described herein may be implemented as hardware, software, firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, an element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

As used in this application, the term "circuitry" may refer to one or more or all of the following:
(a) hardware-only circuit implementations (such as implementations in only analog and/or digital circuitry);
(b) combinations of hardware circuits and software, such as (as applicable):
   (i) a combination of analog and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although specific embodiments were described herein, the scope of the disclosure is not limited to those specific embodiments. The scope of the disclosure is defined by the following claims.

## Claims

1. A network element, NE, (400) implemented in a network (100) that provides at least one data service to User Equipment, UE, (110), the network element comprising:
a means for storing a data off policy (410) that triggers activation or deactivation of a Packet Switch, PS, Data off feature initiated by the network element for the UE;
a means for determining whether to activate the PS Data off feature for the UE based on the data off policy and one or more network service conditions;
a means for generating a first PS Data off request to activate the PS Data off feature for the UE responsive to a determination to activate the PS Data off feature, wherein the first PS Data off request includes a NE-Initiated PS Data Off Exempt Service List that is a set of operator services that are allowed even if the PS Data off feature is activated for a UE; and
a means for initiating transmission of the first PS Data off request for receipt by a gateway of the network that acts as an entry point for downlink traffic for the UE to cause the gateway to filter the downlink traffic for the UE based on the NE-Initiated PS Data Off Exempt Service List.

2. The network element according to claim 1 wherein the network element includes a means for initiating transmission of the first PS Data off request for receipt by the UE.

3. The network element according to claims 1 or 2 wherein the network element includes:
a means for determining whether to deactivate the PS Data off feature for the UE based on the data off policy and the network service conditions;
a means for generating a second PS Data off request to deactivate the PS Data off feature for the UE responsive to a determination to deactivate the PS Data off feature; and
a means for initiating transmission of the second PS Data off request for receipt by the gateway.

4. The network element according to claim 3 wherein the network element includes a means for initiating transmission of the second PS Data off request for receipt by the UE.

5. The network element according to any of claims 1 to 4 wherein the network element includes:
a means for generating, as part of the first PS Data off request, a NE-Initiated PS Data Off Status indicating whether the PS Data off feature is activated or deactivated;
a means for generating, as part of the first PS Data off request, the NE-Initiated PS Data Off Exempt Service List indicating at least one data service that is exempt from the PS Data off feature; and
a means for generating, as part of the first PS Data off request, a NE-Initiated PS Data Off Reason indicating a basis for activating or deactivating the PS Data off feature by the network element.

6. The network element according to claim 5 wherein the network element includes:
a means for generating the NE-Initiated PS Data Off Exempt Service List based on the data off policy.

7. The network element according to any of claims 1 to 6 wherein:
the network element comprises an online charging system (250/350) for the network.

8. The network element according to any of claims 1 to 6 wherein:
the network element comprises a policy control element (218/318) for the network.

9. A method of controlling a Packet Switch, PS, Data off feature at a network element, NE, of a network that provides at least one data service to User Equipment, UE, the method comprising:
storing (602), at the network element, a data off policy that triggers activation or deactivation of the PS Data off feature initiated by the network element for the UE;
determining (606), at the network element, whether to activate the PS Data off feature for the UE based on the data off policy and one or more network service conditions;
generating (608), at the network element, a first PS Data off request to activate the PS Data off feature for the UE responsive to a determination to activate the PS Data off feature, wherein the first PS Data off request includes a NE-Initiated PS Data Off Exempt Service List that is a set of operator services that are allowed even if the PS Data off feature is activated for a UE; and
initiating (610), at the network element, transmission of the first PS Data off request for receipt by a gateway of the network that acts as an entry point for downlink traffic for the UE to cause the gateway to filter the downlink traffic for the UE based on the NE-Initiated PS Data Off Exempt Service List.

10. The method according to claim 9 further comprising:
initiating (612), at the network element, transmission of the first PS Data off request for receipt by the UE.

11. The method according to claims 9 or 10 further comprising:
determining (806), at the network element, whether to deactivate the PS Data off feature for the UE based on the data off policy and the network service conditions;
generating (808), at the network element, a second PS Data off request to deactivate the PS Data off feature for the UE responsive to a determination to deactivate the PS Data off feature; and
initiating (810), at the network element, transmission of the second PS Data off request for receipt by the gateway.

12. The method according to claim 11 further comprising:
initiating (812), at the network element, transmission of the second PS Data off request for receipt by the UE.

13. The method according to any of claims 9 to 12 wherein generating the first PS Data off request comprises:
generating a NE-Initiated PS Data Off Status indicating whether the PS Data off feature is activated or deactivated;
generating the NE-Initiated PS Data Off Exempt Service List indicating at least one data service that is exempt from the PS Data off feature; and
generating a NE-Initiated PS Data Off Reason indicating a basis for activating or deactivating the PS Data off feature by the network element.

14. The method according to claim 13 wherein generating the NE-Initiated PS Data Off Exempt Service List comprises:
generating the NE-Initiated PS Data Off Exempt Service List based on the data off policy.

15. A non-transitory computer readable medium (432) embodying programmed instructions executed by one or more processors (430), wherein the instructions direct the processors to implement a network element (400) of a network (100) that provides at least one data service to User Equipment, UE, (110), the network element NE configured to:
store a data off policy that triggers activation or deactivation of a Packet Switch, PS, Data off feature initiated by the network element for the UE;
determine whether to activate the PS Data off feature for the UE based on the data off policy and one or more network service conditions;
generate a first PS Data off request to activate the PS Data off feature for the UE responsive to a determination to activate the PS Data off feature, wherein the first PS Data off request includes a NE-Initiated PS Data Off Exempt Service List that is a set of operator services that are allowed even if the PS Data off feature is activated for a UE; and
initiate transmission of the first PS Data off request for receipt by a gateway of the network that acts as an entry point for downlink traffic for the UE to cause the gateway to filter the downlink traffic for the UE based on the NE-Initiated PS Data Off Exempt Service List.

## Patentansprüche

1. Netzwerkelement, NE, (400), das in einem Netzwerk (100) implementiert wird, das mindestens einen Datendienst für eine Teilnehmereinrichtung, UE, (110) bereitstellt, wobei das Netzwerkelement Folgendes umfasst:
ein Mittel zum Speichern einer Daten-aus-Richtlinie (410), die eine Aktivierung oder eine Deaktivierung eines Paketvermittlungs(PS)-Daten-aus-Merkmals auslöst, das vom Netzwerkelement für die UE initiiert wird;
ein Mittel zum Bestimmen auf Basis der Daten-aus-Richtlinie und einer oder mehrerer Netzwerkdienstbedingungen, ob das PS-Daten-aus-Merkmal für die UE aktiviert werden soll;
ein Mittel zum Erzeugen einer ersten PS-Daten-aus-Anforderung zum Aktivieren des PS-Daten-aus-Merkmals für die UE in Reaktion auf eine Bestimmung zum Aktivieren des PS-Daten-aus-Merkmals, wobei die erste PS-Daten-aus-Anforderung eine NE-initiierte PS-Daten-aus-Ausnahmedienstliste beinhaltet, die ein Satz von Betreiberdiensten ist, die auch dann erlaubt sind, wenn das PS-Daten-aus-Merkmal für eine UE aktiviert ist; und
ein Mittel zum Initiieren einer Übertragung der ersten PS-Daten-aus-Anforderung zum Empfang durch ein Gateway des Netzwerks, das als ein Eintrittspunkt für Downlinkverkehr für die UE fungiert, um das Gateway zu veranlassen, den Downlinkverkehr für die UE auf Basis der NE-initiierten PS-Daten-aus-Ausnahmedienstliste zu filtern.

2. Netzwerkelement nach Anspruch 1, wobei das Netzwerkelement ein Mittel zum Initiieren einer Übertragung der ersten PS-Daten-aus-Anforderung zum Empfang durch die UE beinhaltet.

3. Netzwerkelement nach Anspruch 1 oder 2, wobei das Netzwerkelement Folgendes beinhaltet:
ein Mittel zum Bestimmen auf Basis der Daten-aus-Richtlinie und der Netzwerkdienstbedingungen, ob das PS-Daten-aus-Merkmal für die UE deaktiviert werden soll;
ein Mittel zum Erzeugen einer zweiten PS-Daten-aus-Anforderung zum Deaktivieren des Daten-aus-Merkmals für die UE in Reaktion auf eine Bestimmung zum Deaktivieren des PS-Daten-aus-Merkmals; und
ein Mittel zum Initiieren einer Übertragung der zweiten PS-Daten-aus-Anforderung zum Empfang durch das Gateway.

4. Netzwerkelement nach Anspruch 3, wobei das Netzwerkelement ein Mittel zum Initiieren einer Übertragung der zweiten PS-Daten-aus-Anforderung zum Empfang durch die UE beinhaltet.

5. Netzwerkelement nach einem der Ansprüche 1 bis 4, wobei das Netzwerkelement Folgendes beinhaltet:
ein Mittel zum Erzeugen eines NE-initiierten PS-Daten-aus-Status als Teil der ersten PS-Daten-aus-Anforderung, der anzeigt, ob das PS-Daten-aus-Merkmal aktiviert oder deaktiviert ist;
ein Mittel zum Erzeugen der NE-initiierten PS-Daten-aus-Ausnahmedienstliste als Teil der ersten PS-Daten-aus-Anforderung, die mindestens einen Datendienst anzeigt, der vom PS-Daten-aus-Merkmal ausgenommen ist; und
ein Mittel zum Erzeugen eines NE-initiierten PS-Daten-aus-Grundes als Teil der ersten PS-Daten-aus-Anforderung, der eine Basis zum Aktivieren oder Deaktivieren des PS-Daten-aus-Merkmals durch das Netzwerkelement anzeigt.

6. Netzwerkelement nach Anspruch 5, wobei das Netzwerkelement Folgendes beinhaltet:
ein Mittel zum Erzeugen der NE-initiierten PS-Daten-aus-Ausnahmedienstliste auf Basis der Daten-aus-Richtlinie.

7. Netzwerkelement nach einem der Ansprüche 1 bis 6, wobei:
das Netzwerkelement ein Onlineabrechnungssystem (250/350) für das Netzwerk umfasst.

8. Netzwerkelement nach einem der Ansprüche 1 bis 6, wobei:
das Netzwerkelement ein Richtliniensteuerelement (218/318) für das Netzwerk umfasst.

9. Verfahren zum Steuern eines Paketvermittlungs(PS)-Daten-aus-Merkmals an einem Netzwerkelement, NE, eines Netzwerks, das mindestens einen Datendienst für eine Teilnehmereinrichtung, UE, bereitstellt, wobei das Verfahren Folgendes umfasst:
Speichern (602) einer Daten-aus-Richtlinie, die eine Aktivierung oder Deaktivierung des PS-Daten-aus-Merkmals auslöst, das vom Netzwerkelement für die UE initiiert wird, am Netzwerkelement;
Bestimmen (606) am Netzwerkelement auf Basis der Daten-aus-Richtlinie und einer oder mehrerer Netzwerkdienstbedingungen, ob das PS-Daten-aus-Merkmal für die UE aktiviert werden soll;
Erzeugen (608) einer ersten PS-Daten-aus-Anforderung am Netzwerkelement zum Aktivieren des PS-Daten-aus-Merkmals für die UE in Reaktion auf eine Bestimmung zum Aktivieren des PS-Daten-aus-Merkmals, wobei die erste PS-Daten-aus-Anforderung eine NE-initiierte PS-Daten-aus-Ausnahmedienstliste beinhaltet, die ein Satz von Betreiberdiensten ist, die auch dann erlaubt sind, wenn das PS-Daten-aus-Merkmal für eine UE aktiviert ist; und
Initiieren (610) einer Übertragung der ersten PS-Daten-aus-Anforderung zum Empfang durch ein Gateway des Netzwerks am Netzwerkelement, das als ein Eintrittspunkt für Downlinkverkehr für die UE fungiert, um das Gateway zu veranlassen, den Downlinkverkehr für die UE auf Basis der NE-initiierten PS-Daten-aus-Ausnahmedienstliste zu filtern.

10. Verfahren nach Anspruch 9, das ferner Folgendes umfasst:
Initiieren (612) einer Übertragung der ersten PS-Daten-aus-Anforderung am Netzwerkelement zum Empfang durch die UE.

11. Verfahren nach Anspruch 9 oder 10, das ferner Folgendes umfasst:
Bestimmen (806) am Netzwerkelement auf Basis der Daten-aus-Richtlinie und der Netzwerkdienstbedingungen, ob das PS-Daten-aus-Merkmal für die UE deaktiviert werden soll;
Erzeugen (808) einer zweiten PS-Daten-aus-Anforderung am Netzwerkelement zum Deaktivieren des PS-Daten-aus-Merkmals für die UE in Reaktion auf eine Bestimmung zum Deaktivieren des PS-Daten-aus-Merkmals; und
Initiieren (810) einer Übertragung der zweiten PS-Daten-aus-Anforderung am Netzwerkelement zum Empfang durch das Gateway.

12. Verfahren nach Anspruch 11, das ferner Folgendes umfasst:
Initiieren (812) einer Übertragung der zweiten PS-Daten-aus-Anforderung am Netzwerkelement zum Empfang durch die UE.

13. Verfahren nach einem der Ansprüche 9 bis 12, wobei das Erzeugen der ersten PS-Daten-aus-Anforderung Folgendes umfasst:
Erzeugen eines NE-initiierten PS-Daten-aus-Status, der anzeigt, ob das PS-Daten-aus-Merkmal aktiviert oder deaktiviert ist;
Erzeugen der NE-initiierten PS-Daten-aus-Ausnahmedienstliste, die mindestens einen Datendienst anzeigt, der vom PS-Daten-aus-Merkmal ausgenommen ist; und
Erzeugen eines NE-initiierten PS-Daten-aus-Grundes, der eine Basis zum Aktivieren oder Deaktivieren des PS-Daten-aus-Merkmals durch das Netzwerkelement anzeigt.

14. Verfahren nach Anspruch 13, wobei das Erzeugen der NE-initiierten PS-Daten-aus-Ausnahmedienstliste Folgendes umfasst:
Erzeugen der NE-initiierten PS-Daten-aus-Ausnahmedienstliste auf Basis der Daten-aus-Richtlinie.

15. Nichttransitorisches computerlesbares Medium (432), auf dem sich programmierte Anweisungen befinden, die von einem oder mehreren Prozessoren (430) ausgeführt werden, wobei die Anweisungen die Prozessoren anleiten, ein Netzwerkelement (400) eines Netzwerks (100) zu implementieren, das mindestens einen Datendienst für eine Teilnehmereinrichtung, UE, (110) bereitstellt, wobei das Netzwerkelement NE zu Folgendem ausgelegt ist:
Speichern einer Daten-aus-Richtlinie, die eine Aktivierung oder eine Deaktivierung eines Paketvermittlungs(PS)-Daten-aus-Merkmals auslöst, das vom Netzwerkelement für die UE initiiert wird;
Bestimmen auf Basis der Daten-aus-Richtlinie und einer oder mehrerer Netzwerkdienstbedingungen, ob das PS-Daten-aus-Merkmal für die UE aktiviert werden soll;
Erzeugen einer ersten PS-Daten-aus-Anforderung, zum Aktivieren des PS-Daten-aus-Merkmals für die UE in Reaktion auf eine Bestimmung zum Aktivieren des PS-Daten-aus-Merkmals, wobei die erste PS-Daten-aus-Anforderung eine NE-initiierte PS-Daten-aus-Ausnahmedienstliste beinhaltet, die ein Satz von Betreiberdiensten ist, die auch dann erlaubt sind, wenn das PS-Daten-aus-Merkmal für eine UE aktiviert ist; und
Initiieren einer Übertragung der ersten PS-Daten-aus-Anforderung zum Empfang durch ein Gateway des Netzwerks, das als ein Eintrittspunkt für Downlinkverkehr für die UE fungiert, um das Gateway zu veranlassen, den Downlinkverkehr für die UE auf Basis der NE-initiierten PS-Daten-aus-Ausnahmedienstliste zu filtern.

## Revendications

1. Élément de réseau, NE, (400) mis en œuvre dans un réseau (100) qui fournit au moins un service de données à un équipement utilisateur, UE, (110), l'élément de réseau comprenant :
des moyens pour stocker une politique de données désactivées, Data-off, (410) qui déclenche l'activation ou la désactivation d'une fonctionnalité Data-off à commutation de paquets, PS, initiée par l'élément de réseau sur l'UE ;
des moyens pour déterminer s'il faut activer la fonctionnalité Data-off PS sur l'UE sur la base de la politique Data-off et d'une ou plusieurs conditions de service de réseau ;
des moyens pour générer une première demande de Data-off PS pour activer la fonctionnalité Data-off PS sur l'UE lorsqu'il est déterminé qu'il faut activer la fonctionnalité Data-off PS, dans lequel la première demande de Data-off PS comporte une liste de services exemptés de Data-off PS initiée par NE qui est un ensemble de services d'opérateur qui sont autorisés même si la fonctionnalité Data-off PS est activée sur un UE ; et
des moyens pour initier la transmission de la première demande de Data-off PS pour réception par une passerelle du réseau qui agit comme point d'entrée pour le trafic de liaison descendante sur l'UE pour amener la passerelle à filtrer le trafic de liaison descendante sur l'UE sur la base de la liste de services exemptés de Data-off PS initiée par NE.

2. Élément de réseau selon la revendication 1, dans lequel l'élément de réseau comporte des moyens pour initier la transmission de la première demande de Data-off PS pour réception par l'UE.

3. Élément de réseau selon les revendications 1 ou 2 dans lequel l'élément de réseau comporte :
des moyens pour déterminer s'il faut désactiver la fonctionnalité Data-off PS sur l'UE sur la base de la politique Data-off et des conditions de service de réseau ;
des moyens pour générer une deuxième demande de Data-off PS pour désactiver la fonctionnalité Data-off PS sur l'UE lorsqu'il est déterminé qu'il faut désactiver la fonctionnalité Data-off PS ; et
des moyens pour initier la transmission de la deuxième demande de Data-off PS pour réception par la passerelle.

4. Élément de réseau selon la revendication 3 dans lequel l'élément de réseau comporte des moyens pour initier la transmission de la deuxième demande de Data-off PS pour réception par l'UE.

5. Élément de réseau selon l'une des revendications 1 à 4 dans lequel l'élément de réseau comporte :
dans le cadre de la première demande de Data-off PS, des moyens pour générer un statut Data-off PS initié par NE indiquant si la fonctionnalité Data-off PS est activée ou désactivée ;
dans le cadre de la première demande de Data-off PS, des moyens pour générer la liste de services exemptés de Data-off PS initiée par NE indiquant au moins un service de données qui est exempté de la fonctionnalité Data-off PS ; et
dans le cadre de la première demande de Data-off PS, des moyens pour générer un motif Data-off PS initié par NE indiquant une base pour l'activation ou la désactivation de la fonctionnalité Data-off PS par l'élément de réseau.

6. Élément de réseau selon la revendication 5 dans lequel l'élément de réseau comporte :
des moyens pour générer la liste de services exemptés de Data-off PS initiée par NE sur la base de la politique Data-off.

7. Élément de réseau selon l'une des revendications 1 à 6 dans lequel :
l'élément de réseau comprend un système de facturation en ligne (250/350) pour le réseau.

8. Élément de réseau selon l'une des revendications 1 à 6 dans lequel :
l'élément de réseau comprend un élément de contrôle de politique (218/318) pour le réseau.

9. Procédé de contrôle d'une fonctionnalité Data-off à commutation de paquets, PS, au niveau d'un élément de réseau, NE, d'un réseau qui fournit au moins un service de données à un équipement utilisateur, UE, le procédé comprenant les étapes suivantes :
au niveau de l'élément de réseau, stocker (602) une politique Data-off qui déclenche l'activation ou la désactivation de la fonctionnalité Data-off PS initiée par l'élément de réseau sur l'UE ;
au niveau de l'élément de réseau, déterminer (606) s'il faut activer la fonctionnalité Data-off PS sur l'UE sur la base de la politique Data-off et d'une ou plusieurs conditions de service de réseau ;
au niveau de l'élément de réseau, générer (608) une première demande de Data-off PS pour activer la fonctionnalité Data-off PS sur l'UE lorsqu'il est déterminé qu'il faut activer la fonctionnalité Data-off PS, dans lequel la première demande de Data-off PS comporte une liste de services exemptés de Data-off PS initiée par NE qui est un ensemble de services d'opérateur qui sont autorisés même si la fonctionnalité Data-off PS est activée sur un UE ; et
au niveau de l'élément de réseau, initier (610) la transmission de la première demande de Data-off PS pour réception par une passerelle du réseau qui agit comme point d'entrée pour le trafic de liaison descendante sur l'UE pour amener la passerelle à filtrer le trafic de liaison descendante sur l'UE sur la base de la liste de services exemptés de Data-off PS initiée par NE.

10. Procédé selon la revendication 9 comprenant en outre l'étape suivante :
au niveau de l'élément de réseau, initier (612) la transmission de la première demande de Data-off PS pour réception par l'UE.

11. Procédé selon les revendications 9 ou 10, comprenant en outre les étapes suivantes :
au niveau de l'élément de réseau, déterminer (806) s'il faut désactiver la fonctionnalité Data-off PS sur l'UE sur la base de la politique Data-off et des conditions de service de réseau ;
au niveau de l'élément de réseau, générer (808) une deuxième demande de Data-off PS pour désactiver la fonctionnalité Data-off PS sur l'UE lorsqu'il est déterminé qu'il faut désactiver la fonctionnalité Data-off PS ; et
au niveau de l'élément de réseau, initier (810) la transmission de la deuxième demande de Data-off PS pour réception par la passerelle.

12. Procédé selon la revendication 11, comprenant en outre l'étape suivante :
au niveau de l'élément de réseau, initier (812) la transmission de la deuxième demande de Data-off PS pour réception par l'UE.

13. Procédé selon l'une des revendications 9 à 12, dans lequel la génération de la première demande de Data-off PS comprend les étapes suivantes :
générer un statut Data-off PS initié par NE indiquant si la fonctionnalité Data-off PS est activée ou désactivée ;
générer la liste de services exemptés de Data-off PS initiée par NE indiquant au moins un service de données qui est exempté de la fonctionnalité Data-off PS ; et
générer un motif Data-off PS initié par NE indiquant une base pour l'activation ou la désactivation de la fonctionnalité Data-off PS par l'élément de réseau.

14. Procédé selon la revendication 13 dans lequel la génération de la liste de services exemptés de Data-off PS initiée par NE comprend l'étape suivante :
générer la liste de services exemptés de Data-off PS initiée par NE sur la base de la politique Data-off.

15. Support non transitoire lisible par ordinateur (432) contenant des instructions programmées exécutées par un ou plusieurs processeurs (430), dans lequel les instructions ordonnent aux processeurs de mettre en œuvre un élément de réseau (400) d'un réseau (100) qui fournit au moins un service de données à un équipement utilisateur, UE, (110), l'élément de réseau, NE, étant configuré pour:
stocker une politique Data-off qui déclenche l'activation ou la désactivation d'une fonctionnalité Data-off à commutation de paquets, PS, initiée par l'élément de réseau sur l'UE ;
déterminer s'il faut activer la fonctionnalité Data-off PS sur l'UE sur la base de la politique Data-off et d'une ou plusieurs conditions de service de réseau ;
générer une première demande de Data-off PS pour activer la fonctionnalité Data-off PS sur l'UE lorsqu'il est déterminé qu'il faut activer la fonctionnalité Data-off PS, dans lequel la première demande de Data-off PS comporte une liste de services exemptés de Data-off PS initiée par NE qui est un ensemble de services d'opérateur qui sont autorisés même si la fonctionnalité Data-off PS est activée sur un UE ; et
initier la transmission de la première demande de Data-off PS pour réception par une passerelle du réseau qui agit comme point d'entrée pour le trafic de liaison descendante sur l'UE pour amener la passerelle à filtrer le trafic de liaison descendante sur l'UE sur la base de la liste de services exemptés de Data-off PS initiée par NE.
